# EUROPEAN PATENT SPECIFICATION

(11) **EP 2 572 402 B1**
(45) Date of publication and mention of the grant of the patent: **12.11.2014**
(21) Application number: 11723398.1
(22) Date of filing: 19.05.2011
(51) Int. Cl.: H01B 1/12, H01G 9/20, H01M 14/00, H01M 10/0566

(54) **IONIC LIQUID BASED ELECTROLYTES CONTAINING SULFIDE/POLYSULFIDE REDOX COUPLE AND USES THEREOF**
ELEKTROLYTE AUF BASIS VON EINER IONENFLÜSSIGKEIT MIT SULFID-/POLYSULFID-REDOXPARTNER UND VERWENDUNGEN DERSELBEN
ÉLECTROLYTES À BASE DE LIQUIDE IONIQUE CONTENANT UN COUPLE RÉDOX SULFURE/POLYSULFURE ET LEURS UTILISATIONS

(30) Priority: 20.05.2010 EP 10382132
(43) Date of publication of application: 27.03.2013
(73) Proprietor: Fundacion Cidetec, 20009 San Sebastian (Guipuzcoa) (ES); Universitat Jaume I, 12071 Castellón De La Plana (ES)
(72) Inventor: BISQUERT MASCARELL, Juan, E-46022 Valencia (ES); MORA SERO, Ivan, E-46100 Burjassot (ES); JOVANOVSKI, Vasko, E-1108 Ljubljana (SI); MARCILLA GARCIA, Rebeca, E-48003 Bilbao (Bizkaia) (ES); TENA ZAERA, Ramon, E-20810 Orio (ES); MECERREYES MOLERO, David, E-2016 Lasarte-Oria (Gipuzkoa) (ES); CABAÑERO SEVILLANO, German, E-20009 San Sebastian (ES)
(74) Representative: Carpintero Lopez, Francisco
(86) International application number: PCT/EP2011/058143
(87) International publication number: WO 2011/144697

(56) References cited:
- EP-A1- 0 024 111
- EP-A1- 1 819 005
- WO-A1-98/11619
- WO-A1-2009/098022
- CN-A- 101 572 192
- JP-A- 53 019 527
- US-A- 4 180 625
- US-A1- 2004 238 826
- Y. BAI ET AL.: "High-perfomamce dye-sensitized solar cells based on solvent-free electrolytes produced from eutectic melts", NATURE MATERIALS, vol. 7, no. 8, 29 June 2008 (2008-06-29), pages 626-630, XP002596270, DOI: 10.1038/nmat2224 cited in the application

## Description

### FIELD OF THE INVENTION

The present invention relates to inexpensive ionic liquid based electrolytes containing sulfide/polysulfide anion and an organic cation serving as a redox electrolyte, hereafter referred as organic sulfide/polysulfide ionic liquid based redox electrolytes, in electrochemical and/or optoelectronic devices, in particular dye or semiconductor (thin film or quantum dot) sensitised solar cells. These ionic liquid electrolytes have moderate viscosity and can be used without a solvent.

### BACKGROUND OF THE INVENTION

Photovoltaics is one of the most promising candidates to supply secure, clean, sustainable energy from an abundant source like solar light. However, the production costs of electricity by the present photovoltaic technology, mainly based on silicon, is still relatively high especially with respect to the conventional fossil fuel energy sources. Electrochemical solar cells are an attractive alternative to silicon solar cells mainly in order to decrease the photovoltaic electricity costs.

The dye sensitised solar cell [B. O'Regan et al. Nature 1991, 353, 737] is the best-known example of electrochemical solar cell. However, variants using semiconductor sensitisers, such as extremely thin films [C. Lévy-Clément et al. Adv. Mater. 2005, 17, 1512] and quantum dots [A. Zaban et al. Langmuir 1998, 14, 3153; P.V. Kamat, J. Phys. Chem. C 2008, 112, 18737], are now emerging as appealing alternatives to efficiently absorb a broader spectral part of the solar irradiance. Additionally, quantum dots are especially interesting due to the potential multiple exciton generation [J.E. Murphy et al. J. Am. Chem. Soc. 2006, 128, 3241], opening wide possibilities to enhance the conversion efficiency.

Electrolytes are a crucial part of the electrochemical devices. In the framework of semiconductor sensitised solar cells, the main issue still to be solved is to find a non-volatile electrolyte encompassing a redox couple that is electrochemically stable, non-corrosive, transparent and compatible with the light absorbing material. I⁻/I₃⁻ has been the most investigated redox couple for dye sensitised solar cells so far.

However, it is not compatible with used semiconductor sensitisers (CdSe, CdS, CdTe, PbS, InP, InAs, etc. [P.V. Kamat, J. Phys. Chem. C 2008, 112, 18737]) due to the rapid corrosion of semiconductor sensitiser. Alternative redox couples such as Fe(CN)₆⁴⁻/Fe(CN)₆³⁻, Fe²⁺/Fe³⁺, and S²-/Sₙ²⁻ in aqueous and [Co(o-phen)₃]^{2+/3+} in organic solvent media have then been proposed. Although aqueous S²⁻/Sₙ²⁻ redox electrolyte which is for instance disclosed in JP 53 019527 A, EP 0 024 111 A1 and US 4 180 625 A, is the most frequently used electrolyte in the emerging investigations in semiconductor sensitised solar cells, the S²⁻/Sₙ²⁻ aqueous redox electrolytes remain poorly understood because of the complex chemistry of sulfur species in water. In addition, the eventual corrosion of the chalcogenide compounds in aqueous electrolytes was pointed out as a major problem of photoelectrochemical cells based on single crystal or polycrystalline films of CdSe [S. Licht et al. Nature 1990,345,330].

Because ionic liquids possess favourable properties like negligible vapour pressure and high ionic conductivity, they are very attractive for fabrication of robust electrochemical devices. The use of ionic liquid based electrolytes containing I⁻/I₃⁻ redox couple has been crucial in improving the long-term stability of the dye sensitised solar cells [Y. Bai et al. Nature Mater. 2008, 7,626].

WO 98/11619 A1 describes an electrolyte suitable for use in electrochemical cells, supercapacitors or electrochromic windows and displays, said electrolyte comprising a composite of a polymer and a molten salt electrolyte immobilised within the polymer, wherein the composite is stable and ionically conducting at a temperature substantially equal to the melting point of the molten salt electrolyte.

CN 101 572 192 A discloses an electrolyte for dye sensitized solar cell comprising a redox couple with elementary iodine, an additive and an ionic liquid based solvent, as well as a viscous agent and a viscosity regulator.

WO 2009/098022 A1 describes a liquid or pasty electrolytic composition for a photovoltaic cell, comprising an ionic liquid and an iodine/iodide system as a redox agent.

In view of the above, it is an objective of the present invention to provide electrolytes for electrochemical and/or optoelectronic devices that may lead to improved performances. Furthermore, it is an objective to increase the stability of such devices in particular electrochemical solar cells.

It is therefore an object of the present invention to provide an alternative redox electrolyte for electrochemical and/or optoelectronic devices that overcomes at least part of the aforementioned drawbacks of previous art and may lead to improved performance, stability and durability of those devices.

It is an object of the present invention to provide an ionic liquid that dissolves sulfur providing an organic sulphide /polysulfide ionic liquid based redox electrolyte with good stability, high degree of reversibility, low vapour pressure and high thermal and chemical stability.

It is another object of the present invention to provide an electrolyte where semiconductor light absorbers (thin films or quantum dots) are stable.

It is yet another objective of the present invention to provide new ionic liquid based redox electrolytes or components of new redox electrolytes that can be favourably applied in these devices. Ionic liquids with negligible vapour pressure are also known as "green" solvents due to their low-toxicity and sustainability. It is thus an objective of the present invention to develop devices for "green" harvest of solar energy.

### SUMMARY OF THE INVENTION

The present inventors discovered that it is possible to prepare a new ionic liquid containing hydrogensulfide or sulfide anions with organic cations. These novel ionic liquids with moderate viscosities are able to dissolve elemental sulfur creating thus, a sulfide/polysulfide redox couple directly, and hence producing very interesting electrolytes. These new organic sulfide/polysulfide ionic liquid based redox electrolytes can be prepared without the need of water or an organic solvent. These organic sulfide/polysulfide ionic liquid based redox electrolytes may improve performance, stability and durability of electrochemical and/or optoelectronic devices, in particular sensitised solar cells with light sensitisers selected from dye, semiconductors and their mixtures. This invention immensely improves the prior art of using aqueous inorganic sulfide/polysulfide redox electrolytes in terms of stability and durability for solar cell application.

In the first aspect the present invention provides a device selected from an electrochemical device, an optoelectronic device and an electrochemical and optoelectronic device containing an electrolyte with a formula selected from M₂S/ M₂Sₙ (formula 1), MHS/ MHSₙ (formula 2) and their mixtures ((formula 1) and (formula 2)) ionic liquids, where M is an organic cation as defined further below.

Another aspect of the present invention affords an electrolyte with formula 1, formula 2 or their mixtures which may optionally further comprise at least one more low-temperature ionic liquid.

In a further aspect the present invention provides the use of one or more of the ionic liquids of the invention in a device selected from an electrochemical device, an optoelectronic device and an electrochemical and optoelectronic device, in particular in sensitised solar cells with light sensitisers selected from dye, semiconductors and their mixtures.

Still a further aspect of the present invention provides a method of preparation of a device selected from an electrochemical device, an optoelectronic device and an electrochemical and optoelectronic device. The device encompasses a semiconductor sensitised electrode, which sensitiser is selected from dye, semiconductors and their mixtures, a counter electrode and the electrolyte layer held between the two electrodes. The electrolyte contains an ionic liquid of a formula selected from M₂S/ M₂Sₙ (formulas 1), MHS/ MHSₙ (formula 2) and their mixtures and may contain different amounts of elemental sulfur.

### BRIEF DESCRIPTION OF THE FIGURES

Figure 1: Cyclic voltammetry of 1:1 molar mixture of bis-(1-butyl-3-methylimidazolium) sulfide and sulfur. A 3 electrode system was used consisting of Pt wires as working and counter electrodes, respectively, and a Ag/Ag₂S reference electrode.
Figure 2: Raman spectra of bis-(1-butyl-3-methylimidazolium) sulfide (below) and its 1:1 mixture with sulfur (above). Peaks at 399 and 435 cm⁻¹ depict polysulfide species.
Figure 3: UV-vis spectra of the same system as in Figure 2 (a pure ionic liquid, b mixture with sulfur) confirm the formation of polysulfide species.
Figure 4: Current-Potential curve of a Semiconductor Sensitised Solar Cell using as electrolyte 1:1 molar mixture of bis-(1-butyl-3-methylimidazolium) sulfide and sulfur.
Illumination 1 sun, AM 1.5 G. Solar cell efficiency: 0.71%, FF=0.44, J_{sc}= 3.96 mA/cm², V_{oc}=0.405 V.
Figure 5: Time dependence of open circuit voltage, V_{oc}., taken at different times after cell assembling. Illumination (1 sun, 1.5 AM G) on-off cycles.
Figure 6: Time dependence of short circuit current, I_{sc}, taken at different times after cell assembling. Illumination (1 sun, 1.5 AM G) on-off cycles for sample just assembled.

### DETAILED DESCRIPTION OF THE INVENTION

The present invention relates to a device, hereinafter referred to as the device of the invention, which is selected from an electrochemical device, an optoelectronic device and an electrochemical and optoelectronic device. These devices exploit the interaction or conversion between electric and chemical phenomena. In these devices the charge transport is combined or accompanied with a redox reaction. An optoelectric device takes advantage of the aforementioned phenomena to convert optical energy to electricity (solar cell) or vice versa (electroluminescent device).

The word "comprise" or "comprising", for the purpose of the present invention is intended to mean "including amongst other'. It is not intended to mean "consisting only of".

An electrolyte is an electrically conductive medium, basically due to the presence of at least one substance that is present in a dissolved and/or molten state and thus dissociated in free ions.

Liquid, in the term "ionic liquid", for the purpose of the present invention, is a substance and/or composition having a melting point at 100 °C or lower. Preferably, any ionic liquid mentioned herein, in particular the ionic liquid according to formulas (1 and 2), independently has preferably a melting point of ≤ 50 °C, more preferably < 35°C and most preferably ≤ 25°C. Accordingly, the ionic liquids that may be used as part of the present invention preferably are room temperature molten ionic liquids.

The expression "redox couple" as used herein refers to a couple comprising an oxidized member and a reduced member.

The present invention also relates to an ionic liquid based redox electrolyte, hereinafter the electrolyte of the invention, comprising a compound of a formula selected from:
Formula 1: M₂S/M₂Sₙ (M₂⁺ S²⁻/M₂⁺ Sₙ²⁻),
Formula 2: MHS/MHSₙ (M⁺ HS⁻/M⁺ HSₙ⁻)
and mixtures thereof, where M is an organic cation.

M bears at least one positive charge. Preferably it carries one positive charge. Examples of M have been disclosed in the previous literature, namely in WO 2004/072089, p18, example 9; WO 2007/109907 A1 p10-11 and EP 1 819 005 A1, p3-5.

In a particular embodiment the organic cation M comprises at least one charged atom i.e. N⁺, C⁺, P⁺, S⁺ and/or combinations thereof. For example, the organic cation may consist of at least one quaternary nitrogen or phosphorus, ternary sulfur, a carbocation and/or combinations thereof.

More particularly M is an organic cation with a formula selected from the group consisting of 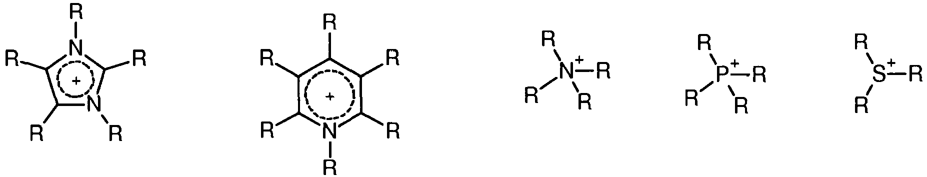 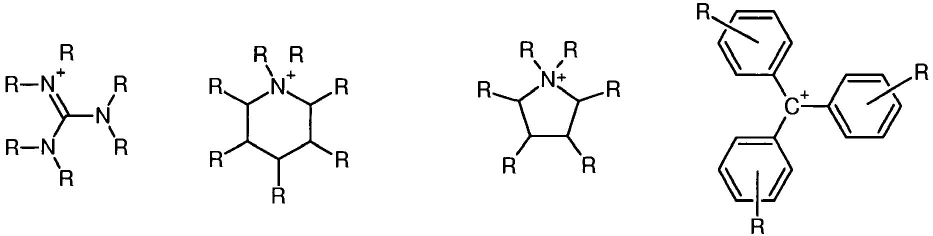 Wherein the substituents R are the same or different and are
(i) selected from the group consisting of:
   C₁-C₃₀ alkyl, C₁-C₃₀ alkoxy, C₁-C₃₀ alkyl sulphide, C₃-C₁₂ cycloalkyl, C₁-C₁₂ heterocyclyl, C₂-C₈ alkenyl, C₂-C₈ alkynyl, C₆-C₁₂ aryl, C₁-C₁₂ heteroaryl, alkylaryl, alkylheteroaryl, alkylcycloalkyl, alkylheterocyclyl,
   Ph₂P(O)-, Ph₂P-, Me₂P(O)-, Me₂P-, Ph₂P(S)-, Me₂P(S)-, Ph₃P=N-, Me₃P=N-, FSO₂CF₂-, CISO₂(CF₂)ₙ- HSO₃(CF₂)ₙ-, HCO₂(CF₂)ₙ, FSO₂NHSO₂(CF₂)ₙ-, CF₃SO₂NHSO₂(CF₂)ₙ, CₙF₂ₙ₊₁SO₂NHSO₂(CF₂)ₙ- FSO₂(CF₂)ₙ-, ClSO₂(CF₂)ₙ, CₙF₂ₙ₊₁SO₂NH (CF₂)ₙ-, -OH, -F, -Cl, -Br, -I, -CN, -NO₂, -SO₃H and C₁-C₆ hydroxy alkyl,
   Wherein n is an integer having a value from 1 to 48
   Or
(ii) R is part of a polymer chain, linear, branched or cross-linked,

And wherein two adjacent substituents R may be linked to each other pairwise to form polycyclic ring systems.

The term "aryl" as used herein refers to a cyclic or polycyclic aromatic ring. According to one example, the aryl group can be phenyl or naphthyl.

The term "heteroaryl" as used herein refers to an aromatic cyclic or fused polycyclic ring system having at least one heteroatom chosen from N, O, and S. Examples include heteroaryl groups such as furyl, thienyl, pyridyl, quinolinyl, isoquinolinyl, indolyl, isoindolyl, triazolyl, pyrrolyl, tetrazolyl, imidazolyl, pyrazolyl, oxazolyl, thiazolyl, benzofuranyl, benzothiophenyl, carbazolyl, benzoxazolyl, pyrimidinyl, benzimidazolyl, quinoxalinyl, benzothiazolyl, naphthyridiriyl, isoxazolyl, isothiazolyl, purinyl, quinazolinyl, and so on.

The term "heterocyclyl" includes non-aromatic rings or ring systems that contain at least one ring having at least one hetero atom (such as nitrogen, oxygen or sulfur). For example, such a term can include all of the fully saturated and partially unsaturated derivatives of the above mentioned heteroaryl groups. Examples of heterocyclic groups include pyrrolidinyl, tetrahydrofuranyl, morpholinyl, thiomorpholinyl, piperidinyl, piperazinyl, thiazolidinyl, isothiazolidinyl, and imidazolidinyl.

In the context of the present invention the groups C₁₋C₃₀ alkyl, C₁-C₃₀ alkoxy and C₁-C₃₀ alkylsulfide can be linear or branched and optionally halogenated up to the complete substitution of hydrogen atoms. Examples of C₁-C₃₀ alkyl groups are CₙF₂ₙ₊₁, HCₙF₂ₙ-, ClCₙF₂ₙ-, BrCₙF₂ₙ-, ICₙF₂ₙ-, CF₃CH₂-, (CF₃)₂CH-, CCl₂F-, CCl₃-. Examples of C₁-C₃₀ alkoxy groups are CₙF₂ₙ₊₁ O-, HCₙF₂ₙO-, ClCₙF₂ₙO-, BrCₙF₂ₙO-, ICₙF₂ₙO-, CF₃CH₂O-, (CF₃)₂CHO-, CCl₂FO-, CCl₃O-. Examples of C₁-C₃₀ alkyl sulphide groups are CₙF₂ₙ₊₁S-, HCₙF₂ₙS-, ClCₙF₂ₙS-, BrCₙF₂ₙS-, ICₙF₂ₙS-, CF₃CH₂S-, (CF₃)₂CHS-, CCl₂FS-, CCl₃S-.

In the context of the invention the C₂-C₈ alkenyl group presents at least a double bond, an example being allyl group; the C₂-C₈ alkynyl group presents at least a triple bond, for example propargyl group. Examples of C₃-C₁₂ cycloalky are cyclopropyl, cyclobutyl, and cyclohexyl.

According to the invention an alkylaryl group is a group which alkyl component has from 1 to 48 carbon atoms and the aryl component has from 6 to 30 carbon atoms, for example: toluenyl

An alkylheteroaryl group is a group which alkyl component has from 1 to 48 carbon atoms and the heteroaryl component has from 6 to 30 carbon atoms, for example: ethyl pyridyl.

An alkylcycloalkyl group is a group which alkyl component has from 1 to 48 carbon atoms and the cyclyl component has from 6 to 30 carbon atoms, for example: methylcyclopentyl.

An alkylheterocyclyl group is a group which alkyl component has from 1 to 48 carbon atoms and the heterocyclyl component has from 6 to 30 carbon atoms, for example: methyltetrahydropyranyl.

According to the invention the groups C₃-C₁₂ cycloalkyl, C₁-C₁₂ heterocyclyl, C₂-C₈ alkenyl, C₂-C₈ alkynyl, C₆-C₁₂ aryl, C₁-C₁₂ heteroaryl, alkylaryl, alkylheteroaryl, alkylcyclyl and alkylheterocyclyl are optionally substituted with one or more substituents such as for example: FSO₂CF₂-, CISO₂(CF₂)ₙ-, FSO₂NHSO₂(CF₂)ₙ-, CF₃SO₂NHSO₂(CF₂)ₙ-, CₙF₂ₙ₊₁SO₂NHSO₂(CF₂)ₙ-, FSO₂(CF₂)ₙ, CISO₂(CF₂)ₙ-, CₙF₂ₙ₊₁SO₂NH (CF₂)ₙ-, -OH, -F, -Cl, -Br, -I, -CN, -NO₂, SO₃H, and C₁-C₆ hydroxy alkyl.

As stated above each R same or different can be part of a polymer chain, linear, branched or cross-linked. Such polymer can be of synthetic origin, such as polyethylenes, polyacrylates, polymethacrylates, polyesters, polyamides, polyolefins, polyethers, silicones, among others, or of natural origin, such as polypeptides, polysaccharides, proteins, DNAs, or their copolymers.

The electrolyte of the present invention can optionally contain at least one solvent. The solvent may be any compound capable of dissolving the redox couple, and it may be suitably selected from the group consisting of organic solvents, water and their mixtures. Examples of organic solvents are for instance, nitrile compounds such as acetonitrile, methoxyacetonitrile, valeronitrile, 3-methoxypropionitrile; lactone compounds such as butyrolactone, valerolactone; carbonate compounds such as ethylene carbonate, propylene carbonate; ethers such as dioxane, ethylene glycol dialkyl ethers; alcohols such as methanol, ethanol; dimethylformamide, CH₂Cl₂, toluene, ureas, such as tetramethylurea.

In a particular embodiment the organic solvents are preferably water-free.

In a particular embodiment the electrolyte of the invention further comprises a low temperature-ionic liquid, which is a salt, comprising a cation and an anion, such as for instance: (FSO₂)₂N⁻, (CF₃SO₂)₂N⁻, (C₂F₅SO₂)₂N⁻, (CF₃SO₂)₃C⁻, CF₃SO₃⁻, CF₃COO⁻, AsF₆⁻, CH₃COO⁻, (CN)₂N⁻, (CN)₃C⁻, NO₃⁻, F⁻, Cl⁻, Br⁻, I⁻, PF₆⁻, BF₄⁻, ClO₄⁻, SCN⁻, and mixtures thereof. The cation of the further low tempearauture ionic liquid can be selected from the group consisting of the organic cations M disclosed above.

In a particular embodiment, the cation of the further low temperature- ionic liquid may be pyridinium, imidazolium, dialkylimidazolium, trialkylimidazolium, dialkylpyrrolidinium, mono or dialkylpyridinium, trialkylsulfonium, oxazolium, thiazolium, oxadiazolium, triazolium, piperidinium, pyrazolium, pyrimidinium, pyrazinium, triazinium, phosphonium, sulfonium, carbazolium, indolium and their derivatives, quaternary amines (such as C₁-C₂₀ tetraalkylammonium) and quaternary phosphonium (such as C₁-C₂₀ tetraalkylphosphonium or C₆-C₁₂ tetraarylphosphonium).

Preferred cations of the further low temperature ionic liquid are imidazolium ions substituted with 1, 2, 3, 4 or 5 C1-C6-alkyl groups, preferably, the imidazolium ion is substituted twice, at the C1 and the C3 position. Examples of further ionic liquids can be taken from the literature. For example, cations of the molten salts are disclosed in EP 1180774A2 (page 22, line 10 to page 29, line 16). As used herein the further low temperature-ionic liquid is at room temperature an ionic liquid, meaning that it has a melting point at or below 25 °C.

The electrolyte of the invention may optionally comprise a solvent in an amount comprised between 0% and 99.9 wt%, preferably between 5.0% to 95.0 wt%.

According to a particular embodiment the electrolyte of the invention further comprises a polymer as a gelling agent, wherein the polymer is for example polyvinylidenefluoride, polyvinylidenelfuoride co-polymers, nafion, polyethylene oxide, polypropylene oxide, polymethylmethacrylate, polyacrylonitrile, polyvinylpyrrolidone, polyaniline, polypyrrole, polythiophene or their derivatives. The addition of polymers to the electrolyte is focused on producing quasi- or semi-solid composition of the electrolyte for improving the solvent retention and thus increased durability of solar cells.

The electrolyte of the present invention may further include inorganic nanoparticles like for example TiO₂, SiO₂, Al₂O₃, MgO, ZnO, ZnS, CdS, and their mixtures which are also capable of enhancing solvent retention.

The electrolyte of the present invention can comprise also other chalcogen/chalcogenides different than S/S²⁻, selected from the group consisting of Se/Se²⁻, Te/Te²⁻ and mixtures thereof.

In a preferred embodiment of the present invention, the electrochemical and/or optoelectronic device of the invention is a photovoltaic cell, a light emitting device, a battery, an electrochromic device or electrochemical (bio)sensor.

In another preferred embodiment of the present invention, the device is a semiconductor sensitised solar cell. An example of the later is disclosed in US 6,861,722.

Yet in another preferred embodiment of the present invention, the device is a dye sensitised solar cell. Examples are disclosed in EP 0 986 079 A2, EP 1 507 307 A1 and EP 1 819 005 A1.

Yet another preferred embodiment of the present invention, the device is a combination of semiconductor and dye sensitised solar cell. An example of the later is disclosed in [I. Mora-Sero et al. Thin Solid Films, 2008, 516, 6994. H.C. Leventis et al. Energy & Environmental Science, 2009, 2, 1176].

According to a preferred embodiment, in case when the device of the present invention is a solar cell, it encompasses a semiconductor, the electrolyte of the present invention and a counter electrode. A preferred embodiment of the invention regarding the semiconductor includes the materials like Si, CdS, ZnO, TiO₂, SnO₂, WO₃, ZnS, CdSe, GaP, GaAs, CdTe, Fe₂O₃, CuInS₂, CuInSe₂, and mixtures thereof. The preferred form of semiconductor surface is mesoporous or microporous, in a form selected from nanowires, nanotubes and mixtures thereof, thus immensely increasing the surface optionally covered with a sensitiser selected from a dye, a semiconductor (quantum dots or thin films) and the their combination and in contact with the electrolyte. The semiconductor is attached preferably on a conductive glass substrate or conductive plastic substrate or a metal foil.

A necessary part of the device of the present invention is a counter electrode. It may be, for example, fluorine doped SnO₂ or indium doped SnO₂ on glass or plastic substrate, optionally coated with Pt or carbon or PEDOT or other conducting polymer selected from polypyrrole, polythiophene or polyaniline or their derivates. The sensitised semiconductor material serves as a photoanode, whereas the counter electrode is a cathode.

### Examples:

### Example 1: Synthesis of the ionic liquid with the formula 2:

In a 100 ml round bottom two necked flask 30 ml of acetone was parched with an inert gas in order to remove the dissolved oxygen. Then 5.07 g (29 mmol) of 1-butyl-3-methylimidazolium chloride (Green solutions) was introduced with constant stirring. To this solution 4.15 g of Na₂S x 9H₂O (32 mmol) was added slowly in several portions. The mixture was vigorously stirred, equipped with a condenser and slowly heated to a reflux temperature. It was then refluxed for 12 hours in order for the anion exchange to complete. When the exchange was complete a 2 phase system was observed comprised of a slightly yellow liquid and a white precipitate. The precipitate was filtered away and the solution was isolated in vacuo. 3.9 g (78 %) of 1-butyl-3-methylimidazolium hydrogensulfide was obtained.

### Example 2: Synthesis of the ionic liquid with the formula 1:

2 g of the ionic liquid from the example 1 was placed in a 10 ml round bottom flask and parched with inert gas for approximately 30 minutes. Then it was connected with a vacuum pump and slowly heated to 80 °C. It was kept under these conditions for 72 hours. 1.12 g (89 %) of bis-(1-butyl-3-methylimidazolium) sulfide was collected.

### Example 3: Preparation of the redox electrolyte

To 1 g (3.22 mmol) of bis-(1-butyl-3-methylimidazolium) sulfide an equimolar amount 0.103 g of elemental sulfur was added. Sulfur slowly dissolved and the solution turned brown because of the formation of polysulfides depicted in Raman and UV-vis spectra.

It was found that such compositions are very useful as redox electrolytes. The redox couple are according to scheme 1 and scheme 2:

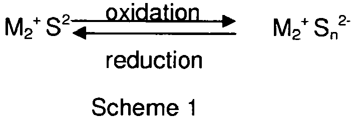

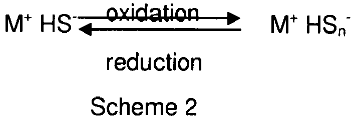

### Example 4: Cyclic voltammetry

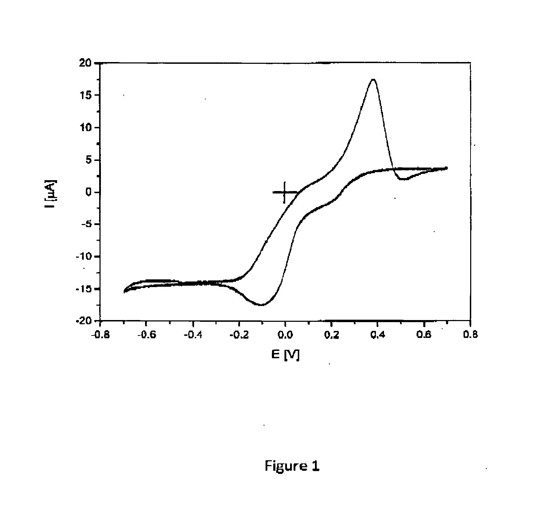

In Figure 1, there is shown a cyclic voltammogram of a 1:1 molar mixture of bis-(1-butyl-3-methylimidazolium) sulfide and sulfur. A 3 electrode system was used consisting of Pt wires as working and counter electrodes, respectively, and a Ag/Ag₂S reference electrode.

### Example 5: Raman spectroscopy

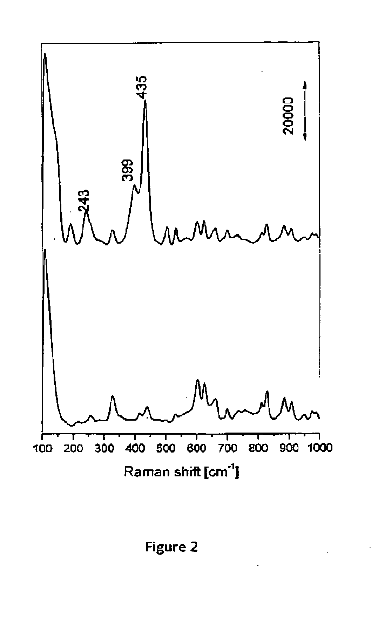

In Figure 2, there is shown Raman spectra of bis-(1-butyl-3-methylimidazolium) sulfide (below) and its 1:1 mixture with sulfur (above). Peaks at 399 and 435 cm⁻¹ depict polysulfide species.

### Example 6: UV-vis spectroscopy

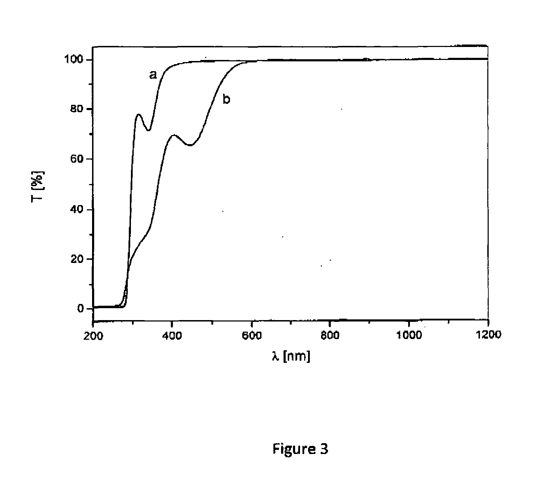

In Figure 3, there is shown the UV-vis spectra of the same system as in Figure 2 (a: pure ionic liquid; b: mixture with sulfur) confirm the formation of polysulfide species.

### Example 7: Test of electrolyte in semiconductor sensitised solar cell

Electrolyte has been tested in a Semiconductor Sensitised Solar Cell (SSSC) using CdSe as light absorbing material. To prepare the cell a compact film of TiO₂ (thickness ~ 100-200 nm) was deposited by spray pyrolisis of titanium(IV) bis(acetoacetonate) di(isopropanoxylate) (Sigma Aldrich) onto the SnO₂:F (FTO) coated glass electrodes (Pilkington TEC15, 15 Ω/sq resistance). The FTO electrodes were kept at 400 ºC during spraying, thus leaving behind a compact film of TiO₂. Subsequently, the coated substrate was fired at 450 ºC for 30 min. A commercial 20-450 nm particle size TiO₂ paste (18NR-AO, Dyesol, Queanbeyan, Australia) was deposited on top of the TiO₂ compact film. Around 0.24 cm² TiO₂ films were deposited by doctor blade and subsequently sintered at 450 ºC for 30 min in a muffle-type furnace. The thickness of the sintered TiO₂ films was approximately 10 µm measured by a profilometer Dektack 6 from Veeco. The TiO₂ photoanodes were sensitised with CdSe by chemical bath deposition (CBD) [S. Gorer et al., J. Phys. Chem. 1994, 98, 5338]. Firstly, as the Se source, an 80mM sodium selenosulphate (Na₂SeSO₃) solution was prepared by dissolving elemental Se powder in a 200mM Na₂SO₃ solution. Secondly, 80mM CdSO₄ and 120mM trisodium salt of nitrilotriacetic acid (N(CH₂COONa)₃) were mixed in a volume ratio 1:1. Finally, both solutions were mixed in a volume ratio 1:2. The TiO₂ electrodes were placed in the dark in a glass container filled with the final solution for 30 hours deposition time. All the electrodes were coated with ZnS by twice dipping alternately into 0.1 M Zn(CH₃COO)₂ and 0.1 M Na₂S solutions for 1 min/dip, rinsing with Milli-Q ultrapure water between dips. The solar cells were prepared by sealing the counter electrode and the semiconductor-sensitised FTO/TiO₂ electrode using a thermoplastic spacer (DuPont™ Surlyn® 1702, thickness 25 µm).with a droplet (10 µl) of electrolyte, 1:1 molar mixture of bis-(1-butyl-3-methylimidazolium) sulfide and sulfur. Thermally platinized FTO has been used as counter electrode.

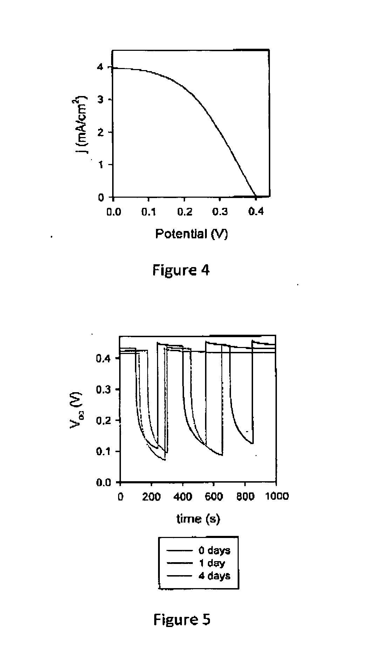

In Figure 4, there is shown a current-voltage curve of a semiconductor sensitised solar cell using as electrolyte 1:1 molar mixture of bis-(1-butyl-3-methylimidazolium) sulfide and sulphur. Illumination 1 sun, AM 1.5 G. Solar cell efficiency: 0.71%, FF=0.44, J_{sc}= 3.96 mA/cm², V_{oc}=0.405 V.

In Figure 5, there is shown the time dependence of open circuit voltage, V_{oc}., taken at different times after cell assembling. Illumination (1 sun, 1.5 AM G) on-off cycles.

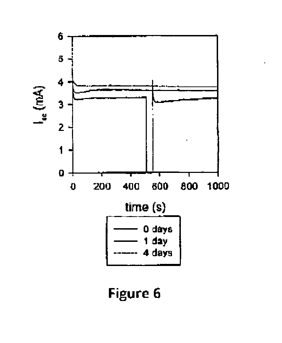

In Figure 6, there is shown the time dependence of short circuit current, I_{sc}, taken at different times after cell assembling. Illumination (1 sun, 1.5 AM G) on-off cycles for sample just assembled.

## Claims

1. An ionic liquid based redox electrolyte comprising a compound of a formula selected from:
Formula 1: M₂S/M₂Sₙ (M₂⁺ S²⁻/M₂⁺ Sₙ²⁻),
Formula 2: MHS/MHSₙ (M⁺ HS⁻/M⁺ HSₙ⁻)
and mixtures thereof, where M is an organic cation.

2. An ionic liquid based redox electrolyte according to claim 1, where M bears at least one positive charge.

3. An ionic liquid based redox electrolyte according to claim 1 or 2, where M comprises at least one charged atom selected from the group consisting of N⁺, C⁺, P⁺, S⁺ and combinations thereof.

4. An ionic liquid based redox electrolyte according to anyone of claims 1 to 3, where M is an organic cation with a formula selected from the group consisting of: 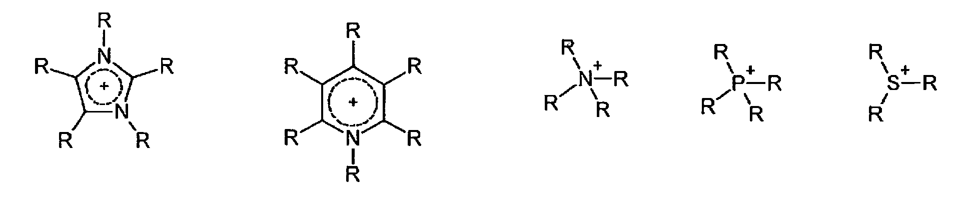 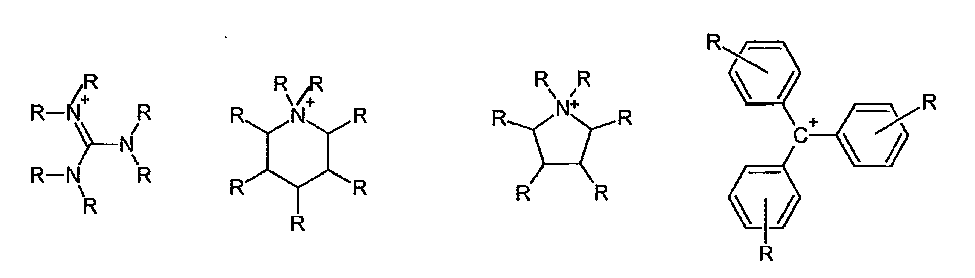 wherein the substituents R are the same or different and are
(i) selected from the group consisting of:
C₉-C₃₀ alkyl, C₁-C₃₀ alkoxy, C₁-C₃₀ alkyl sulphide, C₃-C₁₂ cycloalkyl, C₁-C₁₂ heterocyclyl, C₂-C₈ alkenyl, C₂-C₈ alkynyl, C₈-C₁₂ aryl, C₁-C₁₂ heteroaryl, alkylaryl, alkylheteroaryl, alkylcycloalkyl, alkylheterocyclyl,
Ph₂P(O)-, Ph₂P-, Me₂P(O)-, Me₂P-, Ph₂P(S)-, Me₂P(S)-, Ph₃P=N-, Me₃P=N-, FSO₂CF₂-, CISO₂(CF₂)ₙ-, HSO₃(CF₂)ₙ-, HCO₂(CF₂)ₙ, FSO₂NHSO₂(CF₂)ₙ-, CF₃SO₂NHSO₂(CF₂)ₙ, CₙF₂ₙ₊₁SO₂NHSO₂(CF₂)ₙ- FSO₂(CF₂)ₙ-, CISO₂(CF₂)ₙ-, CₙF₂ₙ₊₁SO₂NH (CF₂)ₙ-, -OH, -F, -Cl, -Br, -I, -CN, -NO₂, -SO₃H and C₁-C₆ hydroxy alkyl,
Wherein n is an integer having a value from 1 to 48
Or
(ii) R is part of a polymer chain, linear, branched or cross-linked,
And wherein two adjacent substituents R may be linked to each other pairwise to form a polycyclic ring system.

5. An ionic liquid based redox electrolyte according to anyone of claims 1 to 4 further comprising a solvent.

6. An ionic liquid based redox electrolyte according to anyone of claims 1 to 5 further comprising a low temperature-ionic liquid salt where the cation is as defined in claims 1 to 4 and the anion is selected from the group consisting of (FSO₂)₂N⁻, (CF₃SO₂)₂N, (C₂F₅SO₂)₂N, (CF₃SO₂)₃C⁻, CF₃SO₃⁻, CF₃COO⁻, AsF₆, CH₃COO⁻, (CN)₂N⁻, (CN)₃C⁻, NO₃⁻, F⁻, Cl⁻, Br⁻, I⁻, PF₆⁻, BF₄⁻, ClO₄⁻, SCN⁻, and mixtures thereof.

7. An ionic liquid based redox electrolyte according to claims 6 where the cation is selected from the group consisting of pyridinium, imidazolium, dialkylimidazolium, trialkylimidazolium, dialkylpyrrolidinium, mono or dialkylpyridinium, trialkylsulfonium, oxazolium, thiazolium, oxadiazolium, triazolium, piperidinium, pyrazolium, pyrimidinium, pyrazinium, triazinium, phosphonium, sulfonium, carbazolium, indolium and their derivatives, quaternary amines and quaternary phosphonium.

8. An ionic liquid based redox electrolyte according to anyone of claims 6 or 7 where the cation of the further ionic liquid salt is imidazolium substituted with 1, 2, 3, 4 or 5 C1-C6-alkyl groups.

9. An ionic liquid based redox electrolyte according to anyone of claims 1 to 8 further comprising a polymer as a gelling agent.

10. An ionic liquid based redox electrolyte according to anyone of claims 1 to 9 further comprising inorganic nanoparticles selected from SiO₂, TiO₂, Al₂O₃, MgO, ZnO, ZnS, CdS and their mixtures.

11. An ionic liquid based redox electrolyte according to anyone of claims 1 to 10, further comprising a chalcogen/chalcogenide selected from Se/Se²⁻, Te/Te²⁻ and mixtures thereof.

12. Use of the ionic liquid based redox electrolyte according to anyone of the preceding claims in a device selected from an electrochemical, optoelectronic and electrochemical and optoelectronic device.

13. A electrochemical and/or optoelectronic device comprising ionic the liquid based redox electrolyte according to anyone of claims 1 to 11.

14. A electrochemical and/or optoelectronic device according to claim 13, selected from a photovoltaic cell, a light emitting device, a battery, an electrochromic device and electrochemical (bio)sensor.

15. A electrochemical and/or optoelectronic device according to claim 13 or 14 said device being a semiconductor sensitised solar cell, a dye sensitised solar cell or a semiconductor and dye sensitised solar cell.

## Patentansprüche

1. Redoxelektrolyt auf Basis einer Ionenflüssigkeit umfassend eine Verbindung mit einer Formel ausgewählt aus:
Formel 1: M₂S/M₂Sₙ (M₂⁺S²⁻/M₂⁺Sₙ²⁻),
Formel 2: MHS/MHSₙ (M⁺HS⁻/M⁺HSₙ⁻)
und Mischungen davon, wobei M ein organisches Kation ist.

2. Redoxelektrolyt auf Basis einer Ionenflüssigkeit nach Anspruch 1, wobei M wenigstens eine positive Ladung trägt.

3. Redoxelektrolyt auf Basis einer Ionenflüssigkeit nach Anspruch 1 oder 2, wobei M wenigstens ein geladenes Atom, ausgewählt aus der Gruppe bestehend aus N⁺, C⁺, P⁺, S⁺ und Kombinationen davon, umfasst.

4. Redoxelektrolyt auf Basis einer Ionenflüssigkeit nach einem der Ansprüche 1 bis 3, wobei M ein organisches Kation mit einer Formel ist, ausgewählt aus der Gruppe bestehend aus: 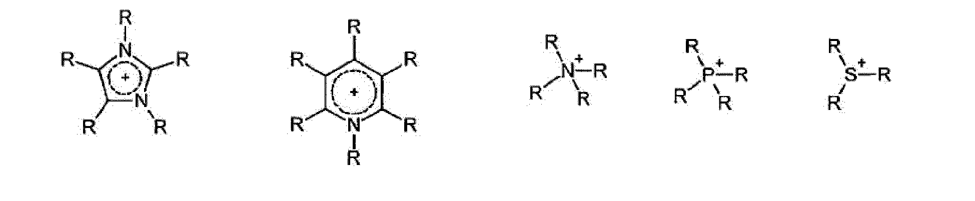 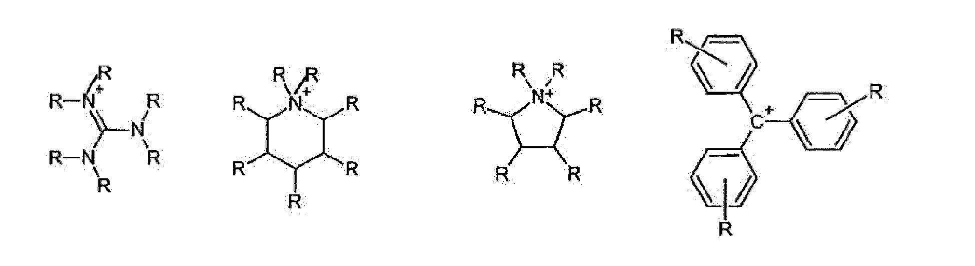 wobei die Substituenten R gleich oder unterschiedlich sind und
(i) ausgewählt sind aus der Gruppe bestehend aus:
C₁-C₃₀-Alkyl, C₁-C₃₀-Alkoxy, C₁-C₃₀-Alkylsulfid, C₃-C₁₂-Cycloalkyl, C₁-C₁₂-Heterocyclyl, C₂-C₈-Alkenyl, C₂-C₈-Alkinyl, C₆-C₁₂-Aryl, C₁-C₁₂-Heteroaryl, Alkylaryl, Alkylheteroaryl, Alkylcycloalkyl, Alkylheterocyclyl,
Ph₂P(O)-, Ph₂P-, Me₂P(O)-, Me₂P-, Ph₂P(S)-, Me₂P(S)-, Ph₃P=N-, Me₃P=N-, FSO₂CF₂-, CISO₂(CF₂)ₙ-, HSO₃(CF₂)ₙ-, HCO₂(CF₂)ₙ-, FSO₂NHSO₂(CF₂)ₙ-, CF₃SO₂NHSO₂(CF₂)ₙ-, CₙF₂ₙ₊₁SO₂NHSO₂(CF₂)ₙ-, FS0₂(CF₂)ₙ-, CISO₂(CF₂)ₙ-, CₙF_{2nI1}SO₂NH(CF₂)ₙ-, -OH, -F, -Cl, -Br, -I, -CN, -NO₂, -SO₃H und C₁-C₆-Hydroxyalkyl,
wobei n eine ganze Zahl mit einem Wert von 1 bis 48 ist
oder
(ii) R Teil einer Polymerkette, linear, verzweigt oder vernetzt ist,
und wobei zwei benachbarte Substituenten R paarweise miteinander verknüpft sein können unter Bildung eines polycyclischen Ringsystems.

5. Redoxelektrolyt auf Basis einer Ionenflüssigkeit nach einem der Ansprüche 1 bis 4, außerdem umfassend ein Lösungsmittel.

6. Redoxelektrolyt auf Basis einer Ionenflüssigkeit nach einem der Ansprüche 1 bis 5, außerdem umfassend ein Niedertemperatur-Ionenflüssigkeitssalz, wobei das Kation wie in den Ansprüchen 1 bis 4 definiert ist und das Anion ausgewählt ist aus der Gruppe bestehend aus (FSO₂)₂N⁻, (CF₃SO₂)₂N⁻, (C₂F₅SO₂)₂N⁻, (CF₃SO₂)₃C⁻, CF₃SO₃⁻, CF₃COO⁻, AsF₆⁻, CH₃COO⁻, (CN)₂N⁻, (CN)₃C⁻, NO₃⁻, F⁻, Cl⁻, Br⁻, I⁻, PF₆⁻, BF₄⁻, ClO₄⁻, SCN⁻ und Mischungen davon.

7. Redoxelektrolyt auf Basis einer Ionenflüssigkeit nach Anspruch 6, wobei das Kation ausgewählt ist aus der Gruppe bestehend aus Pyridinium, Imidazolium, Dialkylimidazolium, Trialkylimidazolium, Dialkylpyrrolidinium, Mono- oder Dialkylpyridinium, Trialkylsulfonium, Oxazolium, Thiazolium, Oxadiazolium, Triazolium, Piperidinium, Pyrazolium, Pyrimidinium, Pyrazinium, Triazinium, Phosphonium, Sulfonium, Carbazolium, Indolium und ihren Derivaten, quartären Aminen und quartärem Phosphonium.

8. Redoxelektrolyt auf Basis einer Ionenflüssigkeit nach einem der Ansprüche 6 oder 7, wobei das Kation des weiteren Ionenflüssigkeitssalzes Imidazolium, substituiert mit 1, 2, 3, 4 oder 5 C1-C6-Alkylgruppen, ist.

9. Redoxelektrolyt auf Basis einer Ionenflüssigkeit nach einem der Ansprüche 1 bis 8, außerdem umfassend ein Polymer als Geliermittel.

10. Redoxelektrolyt auf Basis einer Ionenflüssigkeit nach einem der Ansprüche 1 bis 9, außerdem umfassend anorganische Nanopartikel ausgewählt aus SiO₂, TiO₂, Al₂O₃, MgO, ZnO, ZnS, CdS und ihren Mischungen.

11. Redoxelektrolyt auf Basis einer Ionenflüssigkeit nach einem der Ansprüche 1 bis 10, außerdem umfassend ein Chalkogen/Chalkogenid ausgewählt aus Se/Se²⁻, Te/Te²⁻ und Mischungen davon.

12. Verwendung des Redoxelektrolyten auf Basis einer Ionenflüssigkeit nach einem der vorangehenden Ansprüche in einer Vorrichtung, ausgewählt aus einer elektrochemischen, optoelektronischen und elektrochemischen und optoelektronischen Vorrichtung.

13. Elektrochemische und/oder optoelektronische Vorrichtung umfassend den Redoxelektrolyten auf Basis einer Ionenflüssigkeit nach einem der Ansprüche 1 bis 11.

14. Elektrochemische und/oder optoelektronische Vorrichtung nach Anspruch 13, ausgewählt aus einer fotovoltaischen Zelle, einer lichtemittierenden Vorrichtung, einer Batterie, einer elektrochromen Vorrichtung und einem elektrochemischen (Bio)sensor.

15. Elektrochemische und/oder optoelektronische Vorrichtung nach Anspruch 13 oder 14, wobei die Vorrichtung eine halbleitersensibilisierte Solarzelle, eine farbstoffsensibilisierte Solarzelle oder eine halbleiter- und farbstoffsensibilisierte Solarzelle ist.

## Revendications

1. Electrolyte redox à base de liquide ionique, comprenant un composé d'une formule choisie parmi :
Formule 1 : M₂S/M₂Sₙ (M₂⁺S²⁻ /M₂⁺Sₙ²⁻),
Formule 2 : MHS/MHSₙ (M⁺ HS⁻/M⁺ HSₙ⁻)
et des mélanges de ceux-ci, où M est un cation organique.

2. Electrolyte redox à base de liquide ionique selon la revendication 1, où M porte au moins une charge positive.

3. Electrolyte redox à base de liquide ionique selon la revendication 1 ou 2, où M comprend au moins un atome chargé choisi dans le groupe constitué par N⁺, C⁺, P⁺, S⁺ et des combinaisons de ceux-ci.

4. Electrolyte redox à base de liquide ionique selon l'une quelconque des revendications 1 à 3, où M est un cation organique ayant une formule choisie dans le groupe constitué par : 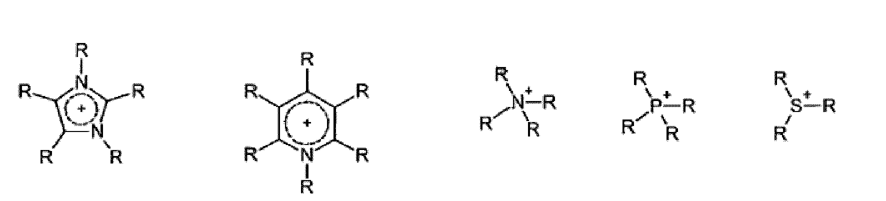 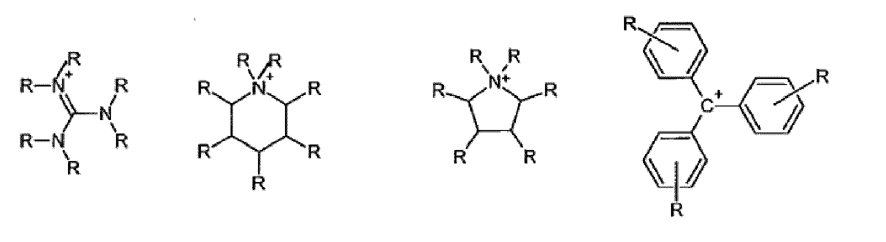 dans laquelle les substituants R sont identiques ou différents et sont
(i) choisis dans le groupe constitué par :
un alkyle en C₁ à C₃₀, un alcoxy en C₁ à C₃₀, un alkylsulfure en C₁ à C₃₀, un cycloalkyle en C₃ à C₁₂, un hétérocycle en C₁ à C₁₂, un alcényle en C₂ à C₈, un alcynyle en C₂ à C₈, un aryle en C₆ à C₁₂, un hétéroaryle en C₁ à C₁₂, un alkylaryle, un alkyl-hétéroaryle, un alkylcycloalkyle, un alkylhétérocycle,
Ph₂P(O)-, Ph₂P-, Me₂P(O)-, Me₂P-, Ph₂P(S)-, Me₂P(S)-, Ph₃P=N-, Me₃P=N-, FSO₂CF₂-, ClSO₂(CF₂)ₙ-, HSO₃(CF₂)ₙ-, HCO₂(CF₂)ₙ-, FSO₂NHSO₂(CF₂)ₙ-, CF₃SO₂NHSO₂ (CF₂)ₙ-, CₙF₂ₙ₊₁SO₂NHSO₂(CF₂)ₙ-, FSO₂(CF₂)ₙ-, ClSO₂(CF₂)ₙ-, CₙF₂ₙ₊₁SO₂NH(CF₂)ₙ-, -OH, -F, -Cl, -Br, -I, -CN, -NO₂, - SO₃H et un hydroxyalkyle en C₁ à C₆,
dans laquelle n est un nombre entier ayant une valeur comprise entre 1 et 48
ou
(ii) R fait partie d'une chaîne polymère, linéaire, ramifiée ou réticulée,
et dans laquelle deux substituants R adjacents peuvent être liés l'un à l'autre par paire pour former un système cyclique polycyclique.

5. Electrolyte redox à base de liquide ionique selon l'une quelconque des revendications 1 à 4, comprenant en outre un solvant.

6. Electrolyte redox à base de liquide ionique selon l'une quelconque des revendications 1 à 5, comprenant en outre un sel de liquide ionique basse température où le cation est tel que défini dans les revendications 1 à 4 et l'anion est choisi dans le groupe constitué par (FSO₂)₂N, (CF₃SO₂)₂N⁻, (C₂F₅SO₂)₂N⁻, (CF₃SO₂)₃C⁻, CF₃SO₃⁻, CF₃COO⁻, AsF₆⁻, CH₃COO⁻, (CN)₂N⁻, (CN)₃C⁻, NO₃⁻, F⁻, Cl⁻, Br⁻, I⁻, PF₆⁻, BF₄⁻, ClO₄⁻, SCN⁻ et des mélanges de ceux-ci.

7. Electrolyte redox à base de liquide ionique selon la revendication 6, où le cation est choisi dans le groupe constitué par un pyridinium, un imidazolium, un dialkylimidazolium, un trialkylimidazolium, un dialkylpyrrolidinium, un mono- ou di-alkylpyridinium, un trialkylsulfonium, un oxazolium, un thiazolium, un oxadiazolium, un triazolium, un pipéridinium, un pyrazolium, un pyrimidinium, un pyrazinium, un triazinium, un phosphonium, un sulfonium, un carbazolium, un indolium et leurs dérivés, les amines quaternaires et un phosphonium quaternaire.

8. Electrolyte redox à base de liquide ionique selon l'une quelconque des revendications 6 ou 7, où le cation du sel de liquide ionique supplémentaire est un imidazolium substitué par 1, 2, 3, 4 ou 5 groupes alkyle en C₁ à C₆.

9. Electrolyte redox à base de liquide ionique selon l'une quelconque des revendications 1 à 8, comprenant en outre un polymère en tant qu'agent gélifiant.

10. Electrolyte redox à base de liquide ionique selon l'une quelconque des revendications 1 à 9, comprenant en outre des nanoparticules inorganiques choisies parmi SiO₂, TiO₂, Al₂O₃, MgO, ZnO, ZnS, CdS et leurs mélanges.

11. Electrolyte redox à base de liquide ionique selon l'une quelconque des revendications 1 à 10, comprenant en outre un chalcogène/chalcogénure choisi parmi Se/Se²⁻, Te/Te²⁻ et des mélanges de ceux-ci.

12. Utilisation de l'électrolyte redox à base de liquide ionique selon l'une quelconque des revendications précédentes, dans un dispositif choisi parmi un dispositif électrochimique, un dispositif optoélectronique et un dispositif électrochimique et optoélectronique.

13. Dispositif électrochimique et/ou optoélectronique, comprenant l'électrolyte redox à base de liquide ionique selon l'une quelconque des revendications 1 à 11.

14. Dispositif électrochimique et/ou optoélectronique selon la revendication 13, choisi parmi une cellule photovoltaïque, un dispositif électroluminescent, une batterie, un dispositif électrochrome et un (bio)capteur électrochimique.

15. Dispositif électrochimique et/ou optoélectronique selon la revendication 13 ou 14, ledit dispositif étant une cellule solaire à semi-conducteur, une cellule solaire à colorant ou une cellule solaire à semi-conducteur et à colorant.
